# EUROPÄISCHE PATENTSCHRIFT

(11) **EP 0 693 653 B1**
(45) Veröffentlichungstag und Bekanntmachung des Hinweises auf die Patenterteilung: **23.05.2001**
(21) Anmeldenummer: 95111128.5
(22) Anmeldetag: 15.07.1995
(51) Int. Cl.: F16M 11/04, G03B 17/56

(54) **Vorrichtung zum lösbaren Verbinden eines fotografischen oder optischen Gerätes mit einem Stativ oder dergleichen**
Device for releaseably connecting a photographic or optical apparatus to a stand or same
Dispositif de fixation amovible d'un appareil photographique ou optique avec un support au analogue

(30) Priorität: 23.07.1994 DE 9411987 U
(43) Veröffentlichungstag der Anmeldung: 24.01.1996
(73) Patentinhaber: Hiesinger, Reinhard, 87724 Ottobeuren (DE); Bothe, Klaus, 82057 Icking (DE)
(72) Erfinder: Hiesinger, Reinhard, 87724 Ottobeuren (DE); Bothe, Klaus, 82057 Icking (DE)
(74) Vertreter: Pfister, Helmut, Dipl.-Ing.

(56) Entgegenhaltungen:
- DE-U- 9 016 714
- DE-U- 9 411 987
- US-A- 3 356 325
- US-A- 3 549 113
- US-A- 3 612 462
- US-A- 4 899 189
- PATENT ABSTRACTS OF JAPAN vol. 6, no. 255 (P-162) (1133) 14. Dezember 1982 & JP-A-57 150 838 (CANON) 17. September 1982

## Beschreibung

Die Erfindung betrifft eine Vorrichtung nach dem Oberbegriff des Patentanspruches 1. Eine Vorrichtung dieser Gattung ist bekannt geworden durch die US-A-3356325. Die Arretiervorrichtung wirkt dort mit einem betätigbaren Drehschieber zusammen, der gegen die Kraft einer Feder beweglich ist, so daß in einer Stellung der Arrtiervorrichtung der Schraubenkopf in die Ausnehmung eingeführt werden kann und bei Freigabe des Drehschiebers in der Ausnehmung gehalten ist.

Wenn auf einem Stativ oder dergleichen eine Kamera oder ein anderes optisches Gerät gewechselt werden soll, muß die Vorrichtung daher mit zwei Händen bedient werden, was umständlich ist und einem oft notwendigen raschen Wechsel der Kamera oder dergleichen entgegensteht.

Der Erfindung liegt daher die Aufgabe zugrunde, eine Anordnung zu treffen, die den Kamerawechsel beschleunigt ohne die sichere Halterung der Kamera oder dergleichen auf dem Stativ zu beeinträchtigen.

Zur Lösung dieser Aufgabe geht die Erfindung aus von einer Vorrichtung der eingangs angegebenen Gattung und schlägt die im kennzeichnenden Teil des Patentanspruches 1 aufgeführten Merkmale vor.

Bei der Erfindung kann das fotografische oder optische Gerät mit einer Hand auf die Vorrichtung aufgesetzt beziehungsweise mit dem Schraubenkopf in die Ausnehmung eingeführt werden, wobei dann die Vorrichtung den Schraubenkopf selbsttätig erfaßt und in gewünschter Weise festhält. Nachdem die Fixierung in dieser Weise erfolgt ist, ist es dann leicht möglich, das fotografische oder optische Gerät in der Vorrichtung auszurichten und starr zu fixieren.

In einer Ausbildung der Erfindung ist vorgesehen, daß der Hebel um eine Achse verschwenkbar ist und unter der Wirkung einer Feder steht, die den Hebel gegen einen Anschlag drückt, in dem auch der Betätigungsstift beweglich gehalten ist. Hierdurch läßt sich eine platzsparende Bauweise erreichen.

Es hat sich als günstig herausgestellt, wenn das Gehäuse aus einem Ober- und einem Unterteil besteht, wobei die beiden Teile je Ausnehmungen aufweisen, die zusammen einen Riegel für den Schieber, den Hebel und die Feder aufnehmen. Auf diese Weise wird die Montage erleichtert und die Abmessungen der Vorrichtung bleiben klein, so daß sie überall untergebracht werden kann.

In der Zeichnung ist eine erfindungsgemäße Vorrichtung schematisch dargestellt. Es zeigen:
- Fig. 1: eine Draufsicht teilweise im Schnitt einer erfindungsgemäßen Vorrichtung in Entriegelungsstellung,
- Fig. 2: eine Draufsicht teilweise im Schnitt einer erfindungsgemäßen Vorrichtung in Arretierstellung,
- Fig. 3: eine Unteransicht einer erfindungsgemäßen Vorrichtung,
- Fig. 4: eine Schnittdarstellung entsprechend der Schnittlinie IV-IV der Fig. 1,
- Fig. 5: eine Schnittdarstellung entsprechend der Schnittlinie V-V der Fig. 2 jedoch mit Schraube und Schraubenkopf und
- Fig. 6: eine Seitenansicht teilweise im Schnitt einer erfindungsgemäßen Vorrichtung in Arretierstellung.

Die Vorrichtung besteht im wesentlichen aus dem Gehäuse 3 und dem Rändelrad 8, das auf der Schraube 6 sitzt. Zur Aufnahme des Rändelrades 8 bzw. des Schraubenkopfes 1 weist das Gehäuse 3 die Ausnehmung 2 auf. Die Ausnehmung 2 ist im wesentlichen kreisförmig und geringfügig größer als das Rändelrad 8, so daß dieses ohne Mühe eingeführt werden kann.

Das zum Beispiel quaderförmige Gehäuse 3 wird gebildet aus dem Oberteil 22 und dem Unterteil 21. Das Unterteil 21 weist ein oder mehrere Schraubbohrungen 18,19 auf, die im montierten Zustand an der Unterseite des Gehäuses 3 die Gewindeschraube des Statives aufnehmen. Durch mehrere Schraubbohrungen 18,19 mit verschiedenen Durchmessern werden den verschiedenen Gewinden der Gewindeschrauben an den Stativen Rechnung getragen.

An der Schmalseite 37 des Gehäuses 3 ist eine Ausnehmung 24 zur Aufnahme des Schwenkhebels 9 vorgesehen. Die Ausnehmung 24 wird hierbei durch zusammenwirkende Aussparungen des Oberteils 22 bzw. des Unterteils 21 geformt.

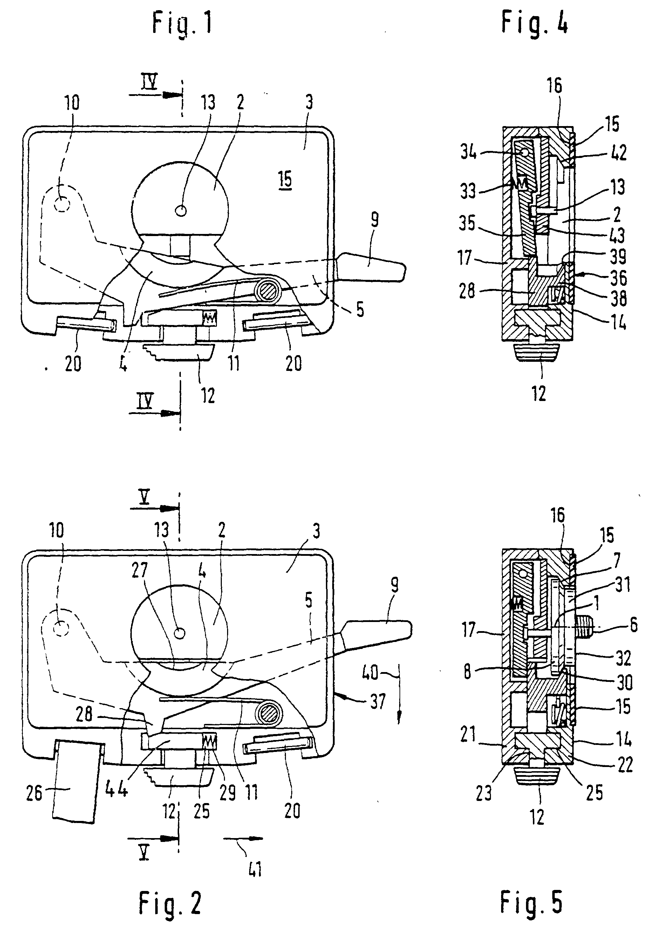

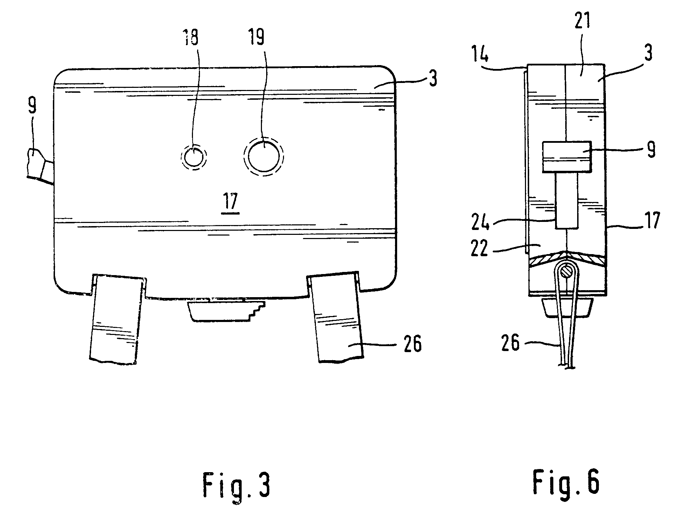

In Fig. 2 und Fig. 6 ist der Schwenkhebel 9 in seiner Arretierstellung gezeigt. Der Schwenkhebel 9 ragt durch die Ausnehmung 24 in das Innere des Gehäuses 3. Der Schwenkhebel 9 ist auf einem Schwenkbolzen 10 gelagert, wobei der Schwenkbolzen 10 auf der der Ausnehmung 24 gegenüberliegenden Seite des Gehäuses 3 vorgesehen ist. Dabei ist der Schwenkbolzen 10 parallel zur Schraubenachse ausgerichtet.

In Fig. 1 ist gezeigt, wie der Schwenkhebel 9 mit der Arretiervorrichtung 4 zusammenwirkt. In der Nähe der seitlichen Ausnehmung 24 ist eine Feder 11 angeordnet, die eine Kraftkomponente bewirkt, die senkrecht zur Achse des Schwenkbolzens 10 wirkt. Diese Feder 11 wirkt auf einen Schenkel 38 des Schwenkhebels 9 bzw. der Arretiervorrichtung 4. Hierdurch wird die Arretiervorrichtung 4 nach oben gedrückt, und die Arretiervorrichtung untergreift mit einer vorstehenden Nase 39 die in die Ausnehmung 2 eingeführte Schraube 6. Die Nase 39 ist hierbei als Rundung 27 ausgebildet, wobei diese Rundung der Rundung am zylindrischen Teil des Rändelrades entspricht. Der Schwenkhebel 9 bzw. die Arretiervorrichtung 4 ist hierbei L-förmig gestaltet, wobei der hochstehende Steg des L parallel zum Schwenkbolzen 10 angeordnet ist und auf der einen Seite den Schenkel 38 und auf der anderen Seite die dem L vorstehende Nase 39 bildet.

Ein Riegel 12 ragt an einer Längsseite durch die Ausnehmung 23 aus dem Gehäuse 3. Der Riegel 12 wirkt auf einen Schieber 44 und ist durch die Feder 29 in einer Verschlußstellung gehalten.
In der Verschlußstellung, wie sie zum Beispiel in Fig. 2 gezeigt ist, wirkt der Schieber 44 auf das Betätigungsende 28 am Schwenkhebel 9. Dies ist Teil der Trennvorrichtung 5. In der in Fig. 2 gezeigten Stellung kann der Schwenkhebel 9 nicht nach unten entlang des Pfeiles 40 geschwenkt werden, weil diese Bewegung durch Anstehen des Betätigungsendes 28 an dem Schieber 30 verhindert wird. Um den Schwenkhebel 9 entlang des Pfeiles 40 verschwenken zu können, ist es zunächst notwendig, den Riegel 12 nach rechts (Fig. 2) entlang des Pfeiles 41 zu bewegen, um den Riegel 30 von dem Betätigungsende 28 zu entfernen. Diese Bewegung entlang des Pfeiles 41 erfolgt gegen die Kraft der Feder 29. Die Feder 29 wird hierbei in die Ausnehmung 25 gepreßt. Die Öffnungsstellung der Vorrichtung, die dadurch bewirkt wird, ist in Fig. 1 und Fig. 4 gezeigt.

Das Rändelrad 8 ist um den Schraubenkopf 1 der Schraube 6 angeordnet. Dabei ist die Schraube 6 als Senkkopfschraube ausgebildet, und die Oberfläche des Kopfes 1 bildet mit der Oberfläche des Rändelrades 8 eine ebene Fläche. Zur besseren Bedienbarkeit weist das Rändelrad 8 eine Rändelung auf, die an einem konischen Zwischenstück 30 endet. Das konische Zwischenstück 30 geht über in den zylindrischen Teil 31, der mit der Planfläche 32 endet. Aus der Planfläche 32 ragt das Gewinde, das in das entsprechende optische Gerät eingeschraubt wird.

Die als Rundung 27 ausgebildete Nase 39 der Arretiervorrichtung 4 weist eine Abschrägung auf, die annähernd parallel ist mit der Fläche des konischen Zwischenstückes 30. Wenn die Arretiervorrichtung 4 die Schraube festhält, wirkt diese schräge Fläche der Nase 39 haltend mit dem konischen Zwischenstück 30 zusammen. Die Öffnung 2 weist an ihrem Rand ebenfalls eine nach innen gerichtete Abschrägung 42 auf. Diese Abschrägung 42 ist ungefähr parallel mit der Fläche des konischen Zwischenstückes 30. In der geschlossenen, arretierten Stellung wird dieses Teil der Fläche durch die Arretiervorrichtung an die Abschrägung 42 gedrückt. Die Kraft der Feder 11 findet somit ihr Widerlager.

In Fig. 4 ist die Funktionsweise der Arretiervorrichtung gezeigt. Um die Achse 34 ist ein Hebel 35 beweglich. In der geöffneten Stellung, also in der Stellung, in der die Vorrichtung eine Schraube aufnimmt, bewirkt die Feder 33, daß der Hebel 35 an dem Anschlag 43 anliegt. Dieser Anschlag 43 ist in dem Gehäuse 3 feststehend, die Achse 34 ist in dem Gehäuse auf der dem Riegel 12 gegenüberliegenden Seite angeordnet. Dieser Anschlag 43 bildet auf der anderen Seite die Anlagefläche für den eingeschobenen Schraubenkopf. Der Anschlag 43 trägt auch einen Stift, der im wesentlichen rechtwinklig zu dieser Anschlagfläche beweglich ist und auf den Hebel 35 wirkt. In der in Fig. 4 gezeigten Stellung ist der Hebel 35 durch die Feder 33 gegen den Anschlag 43 gedrückt und hält somit das Betätigungsende 28 in der geöffneten Stellung.

Beim festen Eindrücken des Rändelrades 8 in die Ausnehmung 2 wird der Betätigungsstift 13 niedergedrückt, der wiederum den beweglich gelagerten Hebel 35 vom Betätigungsende 28 wegdrückt. Dadurch springt die Arretiervorrichtung 4 in die Arretierstellung und untergreift Schraubenkopf 1 bzw. Rändelrad 8 (s. Fig. 5).

In einer ersten Arretierstellung ist das Rändelrad 8 mit dem Schraubenkopf 1 noch in der Ausnehmung 2 beweglich, so daß ein Justieren der Kamera vorgenommen werden kann. Die Kamera ist somit noch zum Beispiel um die Achse der Schraube 6 drehbar und kann dadurch ausgerichtet werden. Durch ein Schließen des Riegels 12, der dann über das Betätigungsende 28 auf die Arretiervorrichtung 4 wirkt, kann auch diese, der Einstellung dienende Beweglichkeit genommen werden, und die Kamera wird fest fixiert.

Die Fixierung eines Rändelrades im Gehäuse 3 kann beispielsweise auch durch magnetische Mittel erfolgen, wobei dann entsprechende Einrichtungen zum Lösen und Arretieren der Vorrichtung vorgesehen werden.

Um ein Verrutschen einer Kamera oder dergleichen auf der Oberfläche 14 des Gehäuses 3 zu vermeiden, ist ein Belag 15 in einer Vertiefung 16 vorgesehen, die der Fläche 17 gegenüber liegt. Der Belag 15 ist aus Gummi oder einem ähnlichen Material und weist im Bereich der Ausnehmung 2 eine der Ausnehmung 2 angepaßte Öffnung auf. Zusätzlich kann der Belag 15 an seiner Oberfläche 36 mit einer Riffelung ausgestattet sein.

An der Längsseite des Gehäuses 3, die den Riegel 12 aufweist, sind beispielsweise zwei Stifte 20 zwischen dem Unterteil 21 und dem Oberteil 22 des Gehäuses 3 verkeilt, die einen Tragegurt 26 aufnehmen. Dazu weisen die Stifte 20 einen Abstand vom Gehäuse 3 auf. Mittels des Tragegurtes 26 kann das Gehäuse 3 am Körper des Benutzers getragen werden, so daß zum Beispiel eine Kamera, die gerade nicht benutzt wird, mit dem Traggurt verbunden werden kann.

## Patentansprüche

1. Vorrichtung zum lösbaren Verbinden eines fotografischen oder optischen Geräts mit einem Stativ oder dergleichen, die ein Gehäuse (3) aufweist, das versehen ist mit einer Ausnehmung (2) für die Aufnahme eines Schraubenkopfes (1) einer in das Gerät, das Stativ oder dergleichen eingeschraubten Schraube (6), mit einer Arretiervorrichtung (4) für das Halten des Schraubenkopfes (1), mit einer betätigbaren Trennvorrichtung (5) zur Freigabe der Arretiervorrichtung (4) und des Schraubenkopfes (1), und mit einem betätigbaren Schieber (44), der in einer ersten Stellung die Trennvorrichtung (5) freigibt und in einer weiteren Stellung die Trennvorrichtung (5) und die Arretiervorrichtung (4) in die Stellung zum Halten des Schraubenkopfes (1) drückt, **dadurch gekennzeichnet, daß** die Arretiervorrichtung (4) in der ersten Stellung des Schiebers (44) von einem Hebel (35) gehalten ist, wobei am Hebel (35) ein Betätigungsstift (13) anliegt, der in die Ausnehmung (2) hineinragt, um mit dem Schraubenkopf (1) zusammenzuwirken.

2. Vorrichtung nach Anspruch 1, **dadurch gekennzeichnet, daß** der Hebel (35) um eine Achse (34) verschwenkbar ist und unter der Wirkung einer Feder (33) steht, die den Hebel (35) gegen einen Anschlag (43) drückt, in dem auch der Betätigungsstift (13) beweglich gehalten ist.

## Claims

1. Device for the releasable connection of a photographic or optical instrument to a tripod or the like, with a housing (3) which is provided with a recess (2) for receiving a screw head (1) of a screw (6) which has been screwed into the instrument, the tripod or the like, with a locking device (4) for holding the screw head (1), with a separating device (5) which can be actuated to release the locking device (4) and the screw head (1), and with a bolt (44) which can be actuated to release, in a first position, the separating device (5) and, in a further position, presses the separating device (5) and the locking device (4) into the position to hold the screw head (1), **characterised in that** the locking device (4) is held in place in the first position of the bolt (44) by a lever (35), where an actuation pin (13) sits close to the lever (35) the pin projecting into the recess (2) in order to act together with the screw head (1).

2. Device according to claim 1, **characterised in that** the lever (35) can be turned around an axis (34) and is acted on by a spring (33), which presses the lever (35) against a stop (43), in which also the actuation pin (13) is held movable.

## Revendications

1. Dispositif de fixation amovible d'un appareil photographique ou de tout autre appareil optique sur un trépied ou sur un autre support équivalent, possédant un châssis (3) comportant un évidement (2) correspondant à l'emplacement de la tête (1) d'une vis (6) placée sur l'appareil photographique, sur le trépied ou sur tout autre support équivalent, comportant en plus un mécanisme de blocage (4) saisissant la tête de vis (1), un mécanisme de séparation (5) à actionner pour éloigner le mécanisme de blocage (4) de la tête de vis (1), et un coulisseau (44) de commande qui, dans sa première position, débloque le dispositif de séparation (5) et qui, dans sa deuxième position, immobilise la tête de vis (1) en poussant le dispositif de séparation (5) et le dispositif de blocage (4) contre la tête de vis (1), dispositif de fixation caractérisé en ce que, le coulisseau étant situé dans la première position, le dispositif de blocage (4) est retenu par un levier (35) commandé par la tête de vis (1) à travers d'une tige mobile (13) située au niveau de l'évidement (1).

2. Dispositif selon la revendication 1 caractérisé en ce que le levier (35) pivote autour d'un axe (34) sous la force d'un ressort (33) qui le pousse contre une butée (43) qui maintient mobile la tige d'actionnement (13).
